# EUROPEAN PATENT APPLICATION

(11) **EP 3 670 982 A1**
(43) Date of publication of application: **24.06.2020**
(21) Application number: 20156926.6
(22) Date of filing: 20.06.2016
(51) Int. Cl.: F16K 37/00

(54) **SAFETY VALVE LEAK ANALYSIS SYSTEM**

(30) Priority: 19.06.2015 GB 201510797
(62) Divisional of application: 16731307.1
(71) Applicant: Seetru Limited, Bristol BS1 6UT (GB)
(72) Inventor: VARGA, Andrew Philip, Bristol, Bristol BS1 6UT (GB)
(74) Representative: Barker Brettell LLP

(57) **Abstract**

A safety valve analysis system comprises: a plurality of sensors, including a displacement sensor (12) arranged to measure displacement of a valve member, an acoustic sensor (13) arranged to measure noise from within a valve body and a pressure sensor (11) arranged to measure fluid pressure at a valve inlet (4); data acquisition means (15) arranged to receive signals from the sensors and generate corresponding valve data; and processing means arranged to generate an output indicative of the condition of the safety valve based on the valve data.

## Description

The present invention relates to a safety valve test system and in particular to an automated test system for determining the condition of a safety valve.

Conventional valve test benches are well known in the art. Such test benches apply relatively small volumes of pressurised media to a valve under test. Lifting of the safety valve occurs due to the force of the pressurised media used for the test. As the flow volumes available from test benches are relatively low the attained lifts of the valve disk from the valve seat are low. Further, as the test proceeds and the valve lifts open the flow capacity of the valve will very quickly dominate, thus such test benches are only capable of applying over-pressures slightly above the set pressure of the valve. The over-pressure, being very close to the set pressure, is therefore a useful indicative estimate of the safety valve set pressure.

Conventional valve test benches rely heavily on the operator to calculate and apply the correct pressures to the valve, read and record the over-pressure measurements and calculate whether the valve is operationally safe. This introduces the possibility of human errors making tests less consistent and repeatable.

The invention provides a safety valve analysis system comprising: a plurality of sensors comprising a displacement sensor arranged to measure displacement of a valve member, an acoustic sensor arranged to measure noise from within a valve body and a pressure sensor arranged to measure fluid pressure at a valve inlet; data acquisition means arranged to receive signals from the sensors and generate corresponding valve data; and processing means arranged to generate an output indicative of the condition of the safety valve based on the valve data.

The sensors may further comprise a gas mass flow meter. The gas flow meter may be arranged at the valve outlet to measure the bubble rate of any gas that has leaked through the valve and the processing means may generate the output based on the measured bubble rate.

The system may further comprise a display unit arranged to display the output from the processing means. The output from the processing means may be arranged to indicate which of a plurality of categories the condition of the valve is in, each of the categories may have a colour associated with it so that the colour may be selected to indicate the condition of the safety valve and wherein the display unit may display the colour to a system operator.

The system may be arranged to produce a hard copy test certificate following testing, and / or the system may generate an electronic record of the test.

The system may be arranged to store calibration and range data in relation to each of the sensors in a memory and access and compare the calibration data with a required calibration data set thereby to determine whether the calibration and accuracy requirements are met. The system may be arranged to control which sensors are used to generate valve data to ensure that the calibration and accuracy requirements are met.

The output indicative of the condition of the test valve may be based on a difference between a test valve's start-to-leak pressure and start-to-lift pressure. The start-to-leak pressure may be determined to be the pressure measured at the pressure sensor when noise detected by the acoustic sensor exceeds a predetermined threshold, for example above a background noise level. The start-to-lift pressure may be determined to be the pressure measured at the pressure sensor when displacement measured by the displacement sensor exceeds a predetermined threshold. Or alternatively, the start-to-lift pressure may be determined to be the maximum pressure measured at the pressure sensor in the time period after displacement measured by the displacement sensor indicates the valve has lifted.

The safety valve may comprise a seal and the processing means may be arranged to determine a set pressure for the safety valve, wherein the set pressure may be determined to be either the highest pressure recorded during the test or the pressure at which the acoustic sensor detects a rise in the noise level from the safety valve depending on the hardness of the seal. The system may be arranged to allow the operator to input seal properties into the processing means and the system may choose how the set pressure is determined, alternatively the operator may select how the set pressure is determined.

The processing means may be arranged to determine a reseal pressure when output from the acoustic sensor drops below a predetermined acoustic threshold. The processing means may be arranged to determine a reseat pressure when the displacement measured by the displacement sensor falls below a predetermined threshold.

The display may be arranged to show a plurality of graphical plots of the valve data. The processing means may apply an algorithm to smooth the plots. The smoothing may be applied to clearly identify the start-to-leak or start-to-lift pressure.

The system may be arranged for integration into a conventional safety valve test bench.

The system may be arranged to monitor the rate of increase in pressure applied to the safety valve and direct an operator to maintain the rate of increase in pressure at a predetermined rate. The system may comprise an automatic flow control valve arrange to control the rate of increase of pressure applied to the safety valve at a predetermined rate. The predetermined rate may be approximately 3% of the expected set pressure per second. The predetermined rate may lie in a range between 1% and 5% of the expected set pressure per second.

The processing means may be arranged to select different algorithms for generating the output indicative of the condition of the safety valve based on the type of valve being tested. For example the condition may be determined based on the difference between two set pressures, such as the start-to-open pressure and the start-to-leak pressure for some valves. For some valves it may be based on the difference between the start-to-leak pressure and the maximum achievable pressure. The system may display a plurality of digital readouts of calculated parameters which are indicative of the condition of a safety valve.

The system may be arranged to monitor the rate of increase in pressure applied to the safety valve and to generate an output arranged to direct an operator to maintain the rate of increase in pressure at a predetermined rate. For example the output may be arranged to indicate one or more conditions of the rate of increase of inlet pressure, which may include the rate of increase being within a target range, or above a target range or below a target range. The condition or state of the rate of increase may be indicated on the display, for example by means of a graphical or digital display.

The invention further provides a method of determining the condition of a safety valve comprising increasing a fluid pressure at the inlet of the valve, sensing the occurrence of at least one event during opening of the valve, determining the inlet pressure when each of the events occurs, and determining the condition of the valve from the inlet pressure or pressures. The event or events may be any one or more of those described below.

The system may include any one of more features disclosed in either of the description of the preferred embodiment of the invention and/or the drawings. Preferred embodiments of the invention will now be described by way of example only with reference to the accompanying drawings in which:
**Figure 1** is a safety valve and analysis system according to an embodiment of the present invention;
**Figure 2** shows a schematic diagram of the safety valve of Figure 1;
**Figure 3** shows a realisation of the valve analysis system added to a conventional safety valve test bench, with a safety valve mounted on the test bench and with sensors fitted;
**Figure 4** shows a schematic diagram of a safety valve fitted to the system shown in Figure 1;

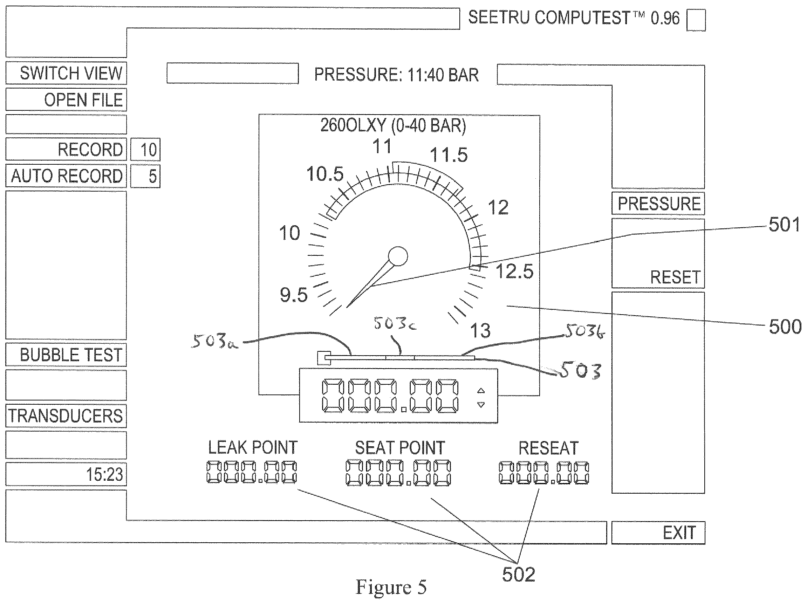

**Figure 5** shows a representation of the display from the system in Figures 1 and 3; and
**Figure 6** shows a data plot on the display from the system of Figures 1 and 3.

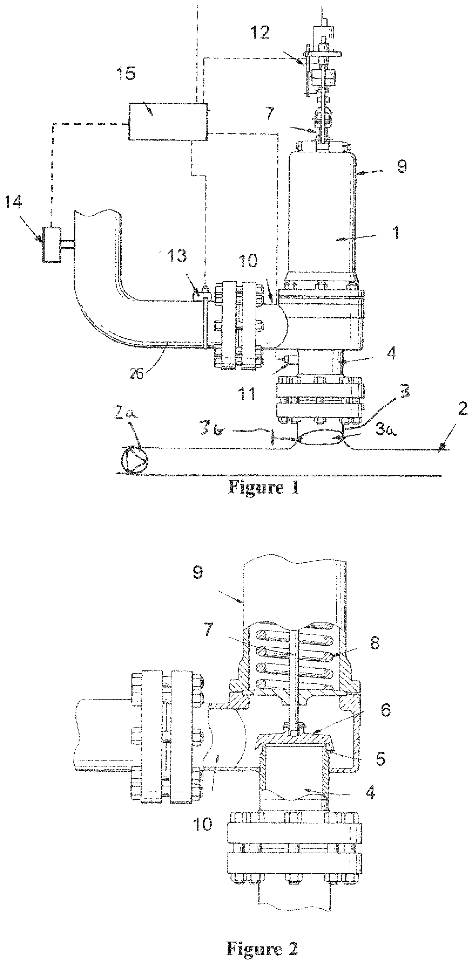

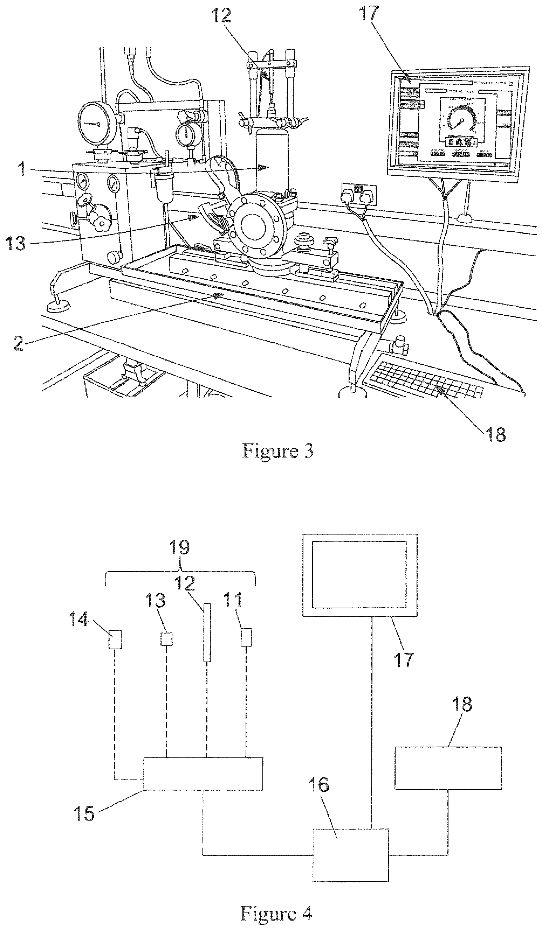

Referring to Figures 1 to 4, a safety valve 1 is fitted to the flow controlled outlet pipe 3 of a conventional safety valve test bench 2. The test bench 2 comprises a source of source of gas pressure, in the form of a compressor 2a, or an accumulator vessel or gas bottle. The outlet pipe 3 has a flow control valve 3a located in it which is arranged to control the rate of flow of gas from the pressure source 2a to the valve 1. The valve 3a may be manually operated by means of a manual control input 3b such as a knob or lever. The valve is a conventional safety valve comprising an inlet port 4, a valve seat 5 which surrounds the inlet port 4 and a valve disk 6 arranged to seat on the valve seat 5 sealing the inlet port 4. The valve disk 6 is held against the valve seat 5 under spring force applied via a spindle 7 which is attached to the centre of the valve disk 6. A spring 8 surrounds the spindle 7 and is contained within a spring housing 9 which is isolated from the flow path through the valve between the valve inlet 3 and valve outlet 10.

A valve analysis system is integrated with the test bench 2. The valve analysis system comprises a set of sensors arranged to measure parameters of the safety valve 1. The sensors include a pressure sensor 11, a displacement sensor 12, an acoustic leak sensor 13, and gas mass flow rate sensor 14. The pressure sensor 11 is a highly sensitive electronic transducer, the displacement sensor 12 is a high accuracy electronic lift/ displacement transducer, e.g. a laser or a linear variable displacement transducer (LVDT), and the acoustic sensor 13 is an ultra-sonic sensor. The pressure sensor 11 is arranged to measure the fluid pressure in the valve inlet 4, this is the system pressure that the safety valve governs. The displacement sensor 12 is attached to the safety valve 1 and monitors any movement of the valve spindle 7. The acoustic leak sensor 13 is arranged proximate to the outlet 10 of the safety valve 1. The gas mass flow rate sensor 14 is connected to the valve outlet via a pipe 26. The valve analysis system also comprises a data acquisition unit 15, a computer 16, a display 17 and a keyboard 18. The set of sensors 19 are connected to the data acquisition unit 15 which provides an interface between the sensors 19 and the computer 16. A mouse and / or touch screen may also be used. The data acquisition unit 15 comprises analogue to digital convertors arranged to receive analogue signals from the sensors 19 and convert them into digital signals containing valve data which the computer 16 can process. A keyboard 18 is arranged to allow an operator to provide input to the computer 16. The display 17 is connected to the computer and is arranged to display measured and computed parameters of the safety valve generated by the computer 16. The computer 16 comprises a processor and memory and is arranged to run software which receives the valve data from the data acquisition unit 15 and performs data analysis, for example selecting one of a set of algorithms and using the selected algorithm to determine the condition of the valve, and calibration functions, and controls the display 17 to indicate a variety of data to the operator.

In use an operator clamps a safety valve 1 to outlet pipe 3 from the test bench 2. The acoustic sensor 13 and displacement sensor 12 are fitted to the valve 1 and, if the test requires it, the gas mass flow rate sensor 14 is connected to the valve outlet 10. The display presents a list of pre-programmed tests an operator can choose from. An analysis is initiated by the operator selecting a particular test via command through the keyboard 18. The system operates in two modes: a real time mode and a post-processing mode. In real-time mode the algorithms evaluate essential parameters during the test and in post-processing mode further analysis of the recorded test data stored in the computer memory is used to determine further parameters of interest.

In general, during the test, the gas pressure at the valve inlet 3 is increased by the operator opening the flow control valve 3a. The pressure is increased gradually until the valve 1 opens. As it opens the computer 16 monitors the signals from the sensors 11, 12, 13, 14 to determine the times at which the various stages of opening, such as start-to-leak, start-to-open, or maximum achievable pressure, occur, and records those times. It is also arranged to monitor the output form the pressure sensor 11 over the whole test period to record the pressure over the test period. It may then be arranged to determine from the output from the pressure sensor 11 the pressure at the inlet when one or more of those events occurs, and over various periods beginning with or ending with one or more of those events. From those measurements it is arranged to determine a value for the condition of the valve as will be described in more detail below.

In order to ensure objective and repeatable evaluation of set pressure it has been found that the speed at which the pressure at the valve inlet is raised, which is determined by the flow rate of gas to the inlet through the flow control valve 3a, must not be too fast or too slow. The system's display indicates the rate of the flow being either too fast, too slow, or just right and an operator watching the display manually controls the flow rate of gas from the test bench to the valve input by way of a manual control valve, so that the increase in applied pressure is kept at roughly 3% of the expected set pressure per second. The expected set pressure may be a value stored in memory in the computer, for example having been input by the operator, or selected by the computer from a number of options stored in memory on the basis of a user input indicative of the type of valve being tested, or on the basis of the valve serial number as described below. As the pressure at the valve inlet increases the computer is arranged to monitor the change in pressure by monitoring the signal from the pressure sensor 11 and to determine from that signal, in real time, a rate of change of pressure with time. If the rate is within a predetermined range, for example from 2% to 4% of the expected set pressure, then the computer is arranged to indicate via the display 17 that the rate is acceptable. If the rate of increase is above or below the preferred range, then that is indicated to the operator on the display so that the operator can respond by opening or closing the flow control valve 3a.

In a modification, the flow control valve may be controlled automatically by the computer 16 so as to maintain the desired rate of increase of valve inlet pressure.

The conventional test bench 2 has a typically small flow capacity, when the pressure is increased at the inlet 6 of a safety valve the following three stages occur in the following order:-
1) The valve will start to leak (no measurable movement, but this can be detected acoustically)
2) The valve disk will start to lift away from the seat (by an amount that can be measured)
3) Eventually the safety valve will open sufficiently to overwhelm the flow capacity of the test bench and the pressure will not increase any further (the Maximum Achievable Pressure), after which it will then decrease again.

The system uses various definitions of set pressure depending on the valve in question, the definitions include:
1) Start-to-leak (or first-audible-leak) pressure,
2) Start-to-lift pressure,
3) Highest pressure achieved during the test (the Maximum Achievable Pressure).

The system uses the valve data from the sensors in various combinations in order to extract appropriate metrics, for example, in different manners for hard and soft seal types. If the seal type is hard and lift is measured then the Set point may be appropriately evaluated as the pressure at which the measured start-to-lift occurred. If the seal type is hard and no lift is measured then the Set point may be appropriately evaluated as the highest pressure achieved during the test. If however the seal type is soft and lift is measured then the Set point may be appropriately evaluated as the pressure at which the first acoustic level increase occurs.

Lift is a measure of movement of the valve disk away from the valve seat. The system measures lift with the displacement sensor 12 which monitors, for example, the top of the valve spindle 7 which is attached directly to the valve disk 6. The 'start-to-lift' point is defined as the pressure at which the lift of the valve disk 6 increases above a defined threshold: in the case of hard seals this threshold may be around 3micrometres, in the case of soft seals this threshold may be around 7micrometres. The displacement sensor has a comparatively high resolution, able to resolve down to at least 2 micrometres.

The 'start-to-leak' or 'first-audible-leak' point is defined as the pressure at which the acoustic signal increases above the monitored background noise level. This will occur when the acoustic level increases above a predetermined threshold above the background. The system is arranged to monitor the acoustic level by monitoring the output from the acoustic sensor. The system is also arranged to provide calibration of the acoustic sensor and to set the magnitude of the threshold which depends on the characteristic output of the sensor and the manner / location in which the sensor is held in place. A consistent mounting mechanism is also provided which prevents movement of the acoustic sensor.

The maximum achieve able pressure is simply defined as the maximum pressure that is achieved during the test, which may be for example the whole period during which the valve is connected to the system, or the period between two points in the test process defined by the computer 16 as the beginning and end of the test. This might be the period over which the system is arranged to collect data from the pressure sensor output.

The system uses different combinations of these measurements, and the maximum achievable pressure, depending on the type of measurement required. The allowed relationship between start-to-lift and start-to-leak is managed within the algorithm according to the type of valve and test required. Thus, for example, in the case of a hard seal the system will not allow start-to-lift to be recorded during an increase in inlet pressure until start-to-leak has occurred, whereas in the case of a soft seal the reverse is true.

The system is also configured to evaluate reseal and reseat pressures. To measure these, the inlet pressure is reduced, for example by the operator closing the flow control valve 3a. As the gas flows through the valve the inlet pressure decreases, unitl the valve closes. The system is arranged to monitor the outputs from the sensors 11, 12, 13, 14 as the valve closes to determine the reseal and reseat pressures. The reseal pressure is defined to be the pressure at which the acoustic leak reduces below the acoustic threshold. The reseat pressure is defined to be the pressure at which the lift reduces below the lift threshold. These parameters are evaluated via post-processing analysis and are essentially the reverse calculations of the start-to-lift and start-to-leak.

In order to attain appropriate levels of accuracy it is necessary to use sensors of appropriate full-scale range. This is because a small percentage full-scale error potentially results in a very large percentage and absolute errors at the low end of the pressure range. It is thus better to use as low as possible a pressure range sensor. The present system automatically calculates the expected percentage error (of reading) for the measurement and presents this to the operator; the relevant International Standards define the acceptable percentage error of value. If this is out of the acceptable range the operator is invited to choose a more appropriately ranged sensor.

The system evaluates the condition of the valve by measuring the difference between the start-to-leak pressure and the start-to-lift pressure. Algorithms for estimation of Seetru Condition Rating® can be found in International Patent Application WO/2006/092548. For accurate evaluation of the Condition Rating the system uses the start-to-leak and start-to-lift pressures parameters. For a quick and simple estimate the system uses the maximum achievable pressure instead of the start-to-lift pressure to calculate the estimated Condition Rating.

The system provides a traffic light display scheme to aid the interpretation of the Condition Rating. The system allows a user to set the lights according to their preference, for example a score of 0-3 may indicate green (i.e. that the valve is in good order), a score of 4-7 may indicate amber, and a score of 8 and above may indicate red (i.e. that the valve has failed the test and needs improvement).

Bubble counting is a method used to measure the leak tightness of a safety valve at a pre-defined pressure, e.g. 10% below the set pressure. The concept is that any gas media that leaks past the seal of a safety valve is piped into a water beaker and the bubble rate emerging from the pipe under water in the beaker is counted. International standards define precisely how such a measurement is to be performed and the acceptable bubble rates.

The analysis system software is configured to control bubble counting. Firstly, a rubber bung is inserted into the outlet 10 of the safety valve with a pipe 26 in it; any leaking media is piped to the electronic gas mass flow meter 14. The pressure to be applied at the inlet 4 of the safety valve is calculated (according to international standards) by the analysis system, the operator applies this pressure. There must then be a stabilisation waiting time (typically one minute - defined by international Standards), the automatic analysis system applies this waiting time - showing the operator a countdown. The test itself is an averaged bubble rate - typically over one minute. The analysis system converts the measured mass flowrate into the equivalent bubble rate and provides a colour coded bar chart presentation of the measured bubble count.

A range of displays is necessary to facilitate effective use of the Safety Valve Analysis System. The system uses three types of display:-
1) Time plots showing the sensor outputs during tests each in the form of a graph with two axes, with one axis representing time and the other axis representing the value of the sensor output
2) Digital displays showing values numerically
3) Simulated dial gauges
4) Graphical information representations / visualisations
5) Hard copy certification

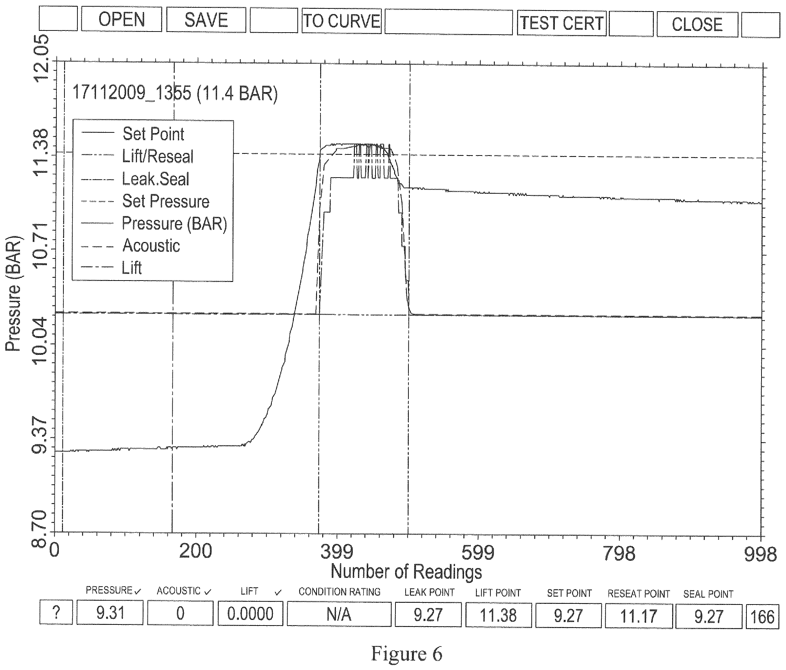

As shown in Figure 6, the system is arranged to record and plot the pressure sensor, displacement (lift) sensor and acoustic sensor signals over time. In order to aid the use of the lift plot by technicians a post-processing algorithm may be applied to the represented plot whereby, once the lift threshold has been crossed, the part of the timeline plot which occurred before the lift threshold was crossed is flattened, so that the representation / visualisation shows a simple and clear step at the point defined as 'start-to-lift'. The system may also apply filtering / smoothing algorithms to the time plots to improve the 'look' of the plots.

In order to facilitate the analysis and use of the time plots it is necessary to provide various zoom functions which allow the plots to be enlarged on the display. The system provides a variable zoom, and in addition the system has three snap zoom functions.

The system provides a snap-zoom into the start-to-lift region: this shows the period from just before the start-to-lift and /or the start-to-leak points through to the whole of the lift, e.g. from 35msecs before the start to 35msecs afterwards, the objective being to scale the display to be as large as possible and to put the start area in the middle of the screen.

The system provides a snap-zoom into the reseat / reseal region: this applies the same principle as the snap-zoom into the start-to-lift region and for the start region, but in this case for the closing region.

The system provides a snap-zoom into the whole of the active test region: this shows the period from just before the start-to-lift point through to after the reseat / reseal point, e.g. from 35msec before the lift to 35msecs after the reseat / reseal point - the objective being to scale the display to be a large as possible and to put the whole test area in the middle of the screen.

The system is arranged to allow an operator to control a cursor on the display so that the operator can analyse the plots. As the cursor is run along the plots readouts of the valve data are provided for each plot and it is possible to click and select values on the plots. The system positions fixed cursors on the plots to mark the determined parameter values, e.g. start-to-leak pressure, start-to-lift pressure, Maximum Achieved Pressure, reseal pressure etc. The system allows the operator to manually move the fixed cursors to change the parameter values thus allowing the operator to override the automatically determined results.

The system displays digital readouts 502 of all parameters on the display, the readouts are colour coded to indicate acceptability. In order to facilitate evaluation of pressure parameters (i.e. pressure applied at the inlet to the valve, start-to-lift pressure, start-to-leak pressure, Maximum Achieved Pressure and reseal pressure) the system displays a simulated dial gauge 500 on the display. This has pointer hands 501 which point to the values of the various parameters. The reading scale of the dial gauge is automatically scaled to a range appropriate for test being undertaken. The pointer hands move dynamically with the measurement, in a manner analogous to a conventional analogue dial gauge. Once the test is over, marker pointers are left in place to show the determined values, i.e. start-to-lift pressure, start-to-leak pressure, Maximum Achieved Pressure and reseal pressure etc. The simulated dial gauge scale is also colour coded to indicate acceptable result ranges, e.g. reading ±3% around an expected reading value.

Various graphical 'visualisations' are used to provide indications to the operator, for example, test speed, i.e. the rate of increase of valve inlet pressure, 'Too slow - correct rate - Too fast' indication may be provided by a coloured horizontal bar chart 503, a central green region 503c corresponding to 'target rate achieved', with left and right regions 503a, 503b corresponding to 'Too slow' and 'Too fast' on the left and right respectively. As an alternative to this, a moving dial similar to that 501 for the pressure may be used to indicate rate of increase of pressure with the target rate indicated on the dial. All digital parameter values displayed are colour coded green or red to indicate pass or fail.

The system software is also capable of generating a hard copy Test Certificate showing all the key test information including time plots with marked parameters. A printer may be connected to the system to print out the certificate.

Each sensor may be 'intelligent' in that it stores an electronically readable identification serial number. Where the sensor is 'intelligent' the system automatically reads the identification of the connected sensor and accesses the relevant calibration and range data record. When a sensor is used which is not 'intelligent' the system allows the user to enter the serial number manually to access the calibration and range data record. The system then checks the suitability of the sensor against the expected measurement values, e.g. set pressure, to ensure that it is within the allowable range and the anticipated error rate associated with the sensor does not exceed the allowed error budget for the test. The system also checks to ensure that the calibration is still in date. The calibration date is displayed on the screen and on the test certificate, together with the calibration expiry date. If the calibration is out of date the system can be set to either disallow testing using that sensor, or merely to highlight on the screen and test certificate the calibration date information. Where the sensor is not calibrated it can still be used and the 'not-calibrated' status is shown instead of the above calibration information. The system is also arranged to perform calibration of the sensors through calibration software running on the computer.

In a modification to the described system of the present invention, for higher cost implementations, an automatic control valve replaces the manual flow control valve. The system automatically controls flow from the test bench via a negative feedback control loop algorithm so that the increase in applied pressure is kept at roughly 3% of the expected set pressure per second, for example it may be within a range of 1% to 5%. The system may therefore be arranged to either provide a fully automated valve test where the system controls the flow from the test bench while determining the valve condition data, or alternatively the system may be arranged to provide a semi-automated valve test where the system guides the operator to control the flow from the test bench while determining the valve condition data.

## Claims

1. A safety valve analysis system for analysing a safety valve comprising a valve member, a valve body and a seal, the system comprising: a plurality of sensors comprising a displacement sensor arranged to measure displacement of the valve member, an acoustic sensor arranged to measure noise from within the valve body and a pressure sensor arranged to measure fluid pressure at a valve inlet; data acquisition means arranged to receive signals from the sensors and generate corresponding valve data; and processing means arranged to generate an output indicative of the condition of the safety valve based on the valve data, and wherein the processing means is arranged to determine a set pressure for the safety valve, wherein the set pressure is determined to be either the highest pressure recorded during the test or the pressure at which the acoustic sensor detects a rise in the noise level from the safety valve depending on the hardness of the seal.

2. A system according to claim 1 wherein the sensors further comprise a gas mass flow meter.

3. A system according to claim 2 wherein the gas mass flow meter is arranged to measure the rate of bubbles leaking through the safety valve and the processing means is arranged to generate the output based on the measured bubble rate.

4. A system according to any preceding claim wherein the system is arranged to monitor the rate of increase in pressure applied to the safety valve and to generate an output arranged to direct an operator to maintain the rate of increase in pressure at a predetermined rate.

5. A system according to any one of claims 1 to 4 wherein the system comprises an automatic flow control valve arrange to control the rate of increase of pressure applied to the safety valve at a predetermined rate.

6. The system according to claim 4 or claim 5 wherein the predetermined rate is in the range 2% to 4% of the expected set pressure per second.

7. The system according to any preceding claim wherein the processing means is arranged to select different algorithms for generating the output indicative of the condition of the safety valve based on the type of valve being tested.

8. The system according to any preceding claim wherein the system displays a plurality of digital readouts of calculated parameters which are indicative of the condition of a safety valve.

9. A system according to any preceding claim further comprising a display unit arranged to display the output or outputs from the processing means.

10. A system according to claim 9 wherein the output from the processing means is arranged to indicate which of a plurality of categories the condition of the valve is in, wherein each of the categories has a colour associated with it so that the colour is selected to indicate the condition of the safety valve, and wherein the display unit displays the colour to a system operator.

11. A system according to any preceding claim wherein the system is arranged to produce a hard copy test certificate following testing.

12. A system according to any preceding claim wherein the system is arranged to store calibration and range data in relation to each of the sensors in a memory and access and compare the calibration with a required calibration data set thereby to determine whether the calibration and accuracy requirements are met.

13. A system according to claim 9 wherein the display is arranged to show a plurality of graphical plots of the valve data.

14. A system according to claim 13wherein the processing means applies an algorithm to smooth the plots.
